# EUROPÄISCHE PATENTSCHRIFT

(11) **EP 0 759 377 B1**
(45) Veröffentlichungstag und Bekanntmachung des Hinweises auf die Patenterteilung: **29.03.2000**
(21) Anmeldenummer: 96109476.0
(22) Anmeldetag: 13.06.1996
(51) Int. Cl.: B60Q 1/068

(54) **Anordnung zur Einstellung des Reflektorneigungenswinkels bei Frontscheinwerfeern eines Kraftfahrzeuges**
Device for controlling the inclination of a headlamp reflector for vehicle
Dispositif de réglage de l'angle d'inclinaison d'un réflecteur de phare de véhicule

(30) Priorität: 18.08.1995 DE 19530444
(43) Veröffentlichungstag der Anmeldung: 26.02.1997
(73) Patentinhaber: DaimlerChrysler AG, 70567 Stuttgart (DE)
(72) Erfinder: Hoffmann, Harry, 71069 Sindelfingen (DE); Baur, Eberhard, 72108 Rottenburg (DE); Jocher, Reiner, 71134 Aidlingen (DE)

(56) Entgegenhaltungen:
- DE-A- 4 104 297
- DE-A- 4 333 769
- FR-A- 2 666 867

## Beschreibung

Die Erfindung betrifft eine Anordnung zur Einstellung des Reflektorneigungswinkels bei Frontscheinwerfern eines Kraftfahrzeuges gemäß dem Oberbegriff des Patentanspruches 1.

Eine gattungsgemäße Anordnung ist aus der US 5 260 857 bekannt. Das Scheinwerfergehäuse weist außenseitig einen Wandabschnitt auf, der einen mit Abstand zur Einstellschraube angeordneten Abstützsteg bildet und eine vertikal und quer zur Einstellschraubenachse verlaufende Durchstecköffnung für einen langen Kreuzschlitz-Schraubendreher zur Justage des Scheinwerferreflektors besitzt. Der Schraubendreher wird von der Durchführung gestützt und geführt. Die Öffnung liegt an der Axialposition einer zum Gehäuse gewandten am Einstellschraubenkopf angeordneten Verzahnung, so daß in diese die schrägen Flanken der Schraubendreherspitze in kämmender Weise eingreifen können. Die aus Stahl bestehende Einstellschraube ist am Gehäuse drehbar gelagert und axial festgelegt. Auf den Schraubenkopf ist ein ZinklegierungsGußteil aufgepreßt, das eine Scheibe mit der Verzahnung und einen zum Gehäuse hin an diese anschließenden kugeligen Abschnitt umfaßt. Die Schraube ist von der Gehäuseaußenseite aus durch das Gehäuse hindurchgesteckt und mit seinem Gewindeabschnitt in ein Innengewinde eines Anschlußteils des Reflektors hineingeschraubt.

Desweiteren ist in der DE-OS 41 04 297 eine Einstellschraube aufgezeigt, deren Kopf aus einem Kuststoffzahnrad besteht und deren Schaft von einem metallischen Verstellbolzen gebildet wird. Das Zahnrad ist auf einen mit einer Kreuzrändelung versehenen endseitigen Abschnitt des Verstellbolzens klemmend aufgeschoben. Zur Montage am Scheinwerfergehäuse wird die Einstellschraube an diesem über einen mit einer Dichtung bestückten Klemmring befestigt. Während die Einstellschraube von hinten, also motorraumseitig durch die im Gehäuse dafür vorgesehenen Durchführung durchgesteckt wird, wird der Klemmring mitsamt der Dichtung vom Inneren des Gehäuses her auf den Schaft der Einstellschraube gesteckt und im Bereich der Durchführung am Gehäuse befestigt, wodurch die Einstellschraube axial festgelegt ist. Für die Ausbildung und die Festlegung der Einstellschraube sind somit drei Bauteile, nämlich das Zahnrad, der Klemmring und der Verstellbolzen notwendig, wobei der Verstellbolzen vorher zur Ausbildung der Rändelung speziell behandelt werden muß, um dem Zahnrad auf ihm einen verliersicheren Halt zu geben. Die Vielzahl der Teile sowie das Anprägen einer Rändelung und deren Zusammenbau stellen dabei eine baulich sehr aufwendige Gestaltung der Einstellschraube dar. Desweiteren muß die Montage der Einstellschraube von zwei Seiten erfolgen, wodurch eine Automatisierung der Montage wesentlich erschwert, wenn nicht gar unmöglich gemacht wird. Weiterhin ist am Scheinwerfergehäuse außenseitig eine metallische Halbschale zur Führung des Kreuzschlitz-Schraubendrehers vorgesehen, die konisch zur Verzahnung des Zahnrades hin verläuft. Abgesehen davon, daß hier ein weiteres Bauteil zur Gestaltung der Anordnung verwendet wird, das gesondert montiert werden muß, muß das Gehäuse außenseitig mit einer für das Bauteil haltgebenden Aussparung ausgebildet werden, wodurch die Fertigung des Gehäuses aufwendiger wird. Außerdem kann der zwischen Halbschale und Zahnrad eingesteckte Kreuzschlitz-Schraubendreher mit seiner Spitze durch die direkte Anlage seiner Flanken an der Halbschale einerseits und der Verzahnung des Zahnrades andererseits an der Einstellschraube verklemmen, wobei dies insbesondere dann auftritt, wenn der Schraubendreher an der Halbschale zerspanend wirkt. Durch gewaltsames Herausziehen des Schraubendrehers aus seiner Klemmlage kann die Einstellschraube bei einjustierter Reflektorstellung leicht verdreht werden, so daß der Reflektor wieder dejustiert wird. Bei nur leichter Anlage an der Halbschale sowie an dem Zahnrad zur Vermeidung einer Verklemmung ist der seitliche Halt in der Führung nicht ausreichend gegeben, um ein Herausrutschen des Schraubendrehers völlig ausschließen zu können, so daß eine unterbrechungsfreie Ausführung der Justierung nicht gewährleistet ist.

Der Erfindung liegt die Aufgabe zugrunde, eine gattungsgemäße Anordnung dahingehend weiterzubilden, daß eine einfache automatisierbare und verliersichere Montage der Einstellschraube einerseits und in einfacher Weise eine haltgebende, jedoch verklemmungsfreie Führung des Kreuzschlitz-Schraubendrehers zur Justierung des Reflektors andererseits erreicht wird.

Die Aufgabe ist erfindungsgemäß durch die im Patentanspruch 1 angegebenen kennzeichnenden Merkmale gelöst.

Aufgrund der Integrierung der Verzahnung in die Ausformung der Einstellschraube und der Einbeziehung des Befestigungsmittels für die Einstellschraube und der Führung für den Kreuzschlitz-Schraubendreher in die Ausformung des Scheinwerfergehäuses wird die Anzahl der Bauteile zur Einstellung des Reflektors auf ein Teil, nämlich die Einstellschraube selber, reduziert, wobei gleichzeitig die Ausbildung der Anordnung vereinfacht wird. Durch die Einteiligkeit der Einstellschraube, deren Durchmesser kleiner als der der für sie im Gehäuse vorgesehenen Durchführung bemessen ist, kann die Montage in einfacher Weise aus einer Richtung - vom Gehäuseinneren aus - erfolgen, indem die Einstellschraube unter geringem Aufwand durch die Durchführung gesteckt wird, wobei am Gehäuse angeformte als Befestigungsmittel dienende Rastelemente an der Einstellschraube einrasten und diese axial festlegen. Durch die erheblich vereinfachte Montage, bei der nur ein Bauteil in einer einzigen Montagerichtung gehandhabt werden muß, wird die Montage auch kostengünstiger. Gleichermaßen wird eine Automatisierbarkeit der Montage ohne besonderen Aufwand erreicht. Desweiteren entfällt durch die Einteiligkeit der Einstellschraube ein aufwendiger und kostenintensiver Zusammenbau. Ebenso wird die Fertigung des ursprünglichen Bauteilensembles vereinfacht und die damit zusammenhängenden Fertigungskosten verringert. Weiterhin entfallen das herkömmliche metallische Führungsbauteil und die Ausbildung einer dafür am Gehäuse erforderlichen Aufnahme aufgrund der Ausformung des Gehäuses mit einem Abstützsteg, so daß auch hier der Fertigungsund Montageaufwand, den gesondertes Führungsbauteil und die Aufnahme benötigt, und die damit verbundenen Kosten entfallen. Durch die von der Verzahnung beabstandete Öffnung im Abstützsteg wird eine Führung des Kreuzschlitz-Schraubendrehers umlaufend mit sicherem seitlichem Halt geschaffen, wobei der Schraubendreher sich an zwei Stellen, dem Abstützsteg und der Verzahnung abstützt und ein Abrutschen verhindert wird. Durch das Fehlen der Anlage des Führungsteils an der Spitze des Schraubendrehers und damit der Verlagerung der Führung aus dem Eingriffsbereich heraus wird dessen Verklemmung an der Verzahnung und durch das Fehlen einer die spanabhebenden Flanken der Schraubendreherspitze an die Verzahnung pressende Kraft, die von dem herkömmlichen Führungsteil vermittelt wird, ein Abrieb der Verzahnung vermieden, wodurch die Standzeit der Anordnung erhöht wird.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 in einer Draufsicht einen Abschnitt der erfindungsgemäßen Anordnung,
Fig. 2 die Anordnung aus Fig. 1 in einem seitlichen Längsschnitt entlang der Linie II-II.

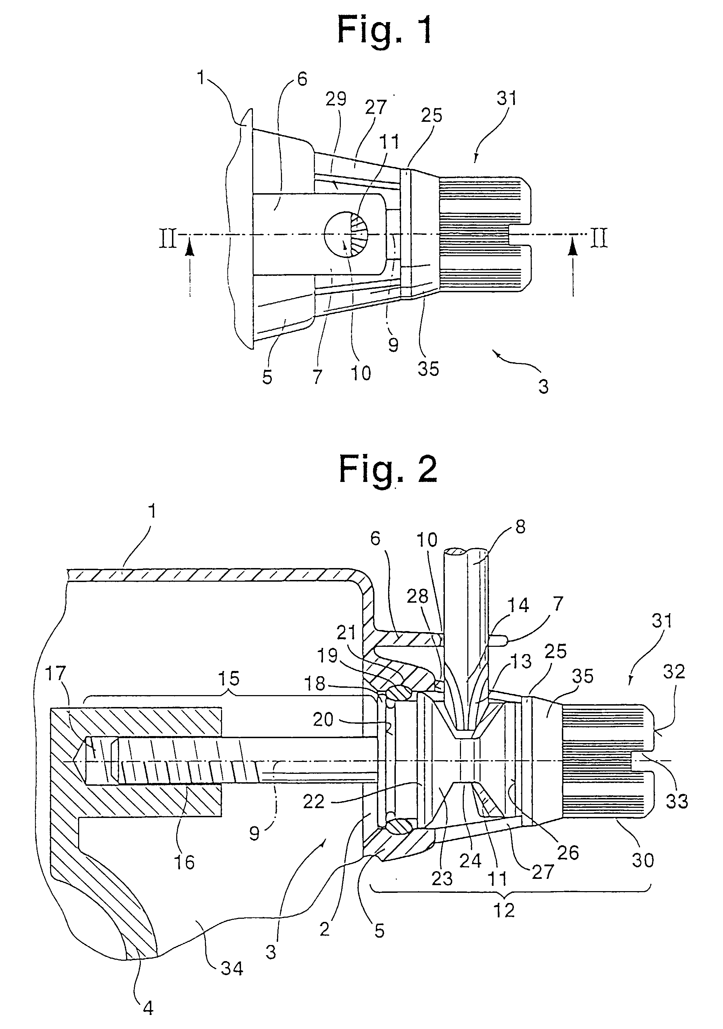

In Fig. 1 ist abschnittsweise ein Scheinwerfergehäuse 1 aus Kunststoff, insbesondere ein Frontscheinwerfergehäuse eines Kraftfahrzeuges dargestellt, das eine Durchführung 2 für eine Einstellschraube 3 zur Einstellung des Neigungswinkels eines Scheinwerferreflektors 4 aufweist. Die Durchführung 2 ist derart ausgerichtet, daß die Einstellschraube 3 horizontal gelegen ist. Die Durchführung 2 ist von einem kegelstumpfförmigen Abschnitt 5 des Gehäuses 1 umgeben, der von diesem nach außen absteht (Fig. 2). Oberhalb des Abschnittes 5 ist am Gehäuse 1 eine Lasche 6 angeformt, von der ein Abstützsteg 7 für einen Kreuzschlitz-Schraubendreher 8 in horizontaler Richtung abragt. Der von der in Einbaulage befindlichen Einstellschraube 3 vertikal beabstandete Abstützsteg 7 weist eine quer zur Schraubenachse 9 horizontal ausgerichtete Durchstecköffnung 10 auf, die an der Axialposition einer Steilkegelverzahnung 11 gelegen ist, wodurch der Abstützsteg 7 die Führung für den Schraubendreher 8 bildet.

Die Steilkegelverzahnung 11 ist koaxial zur Schraubenachse 9 am Umfang des aus dem Gehäuse 1 herausragenden kopfseitigen Abschnittes 12 der aus Kunststoff bestehenden Einstellschraube 3 umlaufend werkstoffidentisch angespritzt, wodurch Verzahnung 11 und Einstellschraube 3 ein einheitliches Bauteil bilden. Die Verzahnung 11 liegt relativ zum Zentrum der Durchstecköffnung 10 etwas axial nach außen versetzt, so daß die Flanken 13 der Schraubendreherspitze 14 mit der Verzahnung 11 zur Verdrehung der Einstellschraube 3 kämmen kann. Die Spitze 14 bildet damit eine Gegenverzahnung zur Verzahnung 11 aus.

Wie aus Fig. 2 zu ersehen ist, greift die Einstellschraube 3 mit ihrem schaftseitigen in das Gehäuse 1 hineinragenden Abschnitt 15, der ein Außengewinde 16 trägt, in ein Mutterngewinde 17 ein, das am Reflektor 4 angebracht ist. Die Einstellschraube 3 weist einen in der Einbaulage im Bereich der Durchführung 2 gelegenen Ringbund 18 auf, an dem eine auf die Einstellschraube 3 gesteckte ringförmige Elastomerdichtung 19 anliegt. Der Ringbund 18 stützt sich auf reflektorabgewandter Seite 20 an einem ringförmigen, von der Wandung der Durchführung 2 nach innen stehenden Bund 21 ab.

Im weiteren nach außen gerichteten Verlauf der Einstellschraube 3 weist diese in einem axialen Abstand, der etwas größer ist als die Dicke der Dichtung 19, einen weiteren Ringbund 22 auf, so daß die Ringdichtung 19 auf der Einstellschraube 3 nach beiden Richtungen axial sicher gehalten ist. Die Dichtung 19 sorgt nicht nur dafür, daß in das Scheinwerfergehäuse 1 keine Feuchtigkeit bzw. Spritzwasser eindringt, sondern gleicht auch die Spielfreiheit der Einstellschraube 3 aus. Desweiteren gibt sie der Einstellschraube 3 eine gewisse Schwergängigkeit, so daß eine ungewollte Verdrehung der Einstellschraube 3 und damit eine unerwünschte Dejustierung des Reflektors 4 vermieden wird.

An den Ringbund 22 nach außen anschließend ist die Einstellschraube konisch zulaufend ausgebildet, wobei dieser Konus 23 entsprechend des konischen Verlaufes der diesem spiegelbildlich gegenüberliegenden Verzahnung 11 gestaltet ist. Die zwischen dem Konus 23 und der Verzahnung 11 dabei gebildete Ringnut 24 stellt oberseitig den Eingriffsraum für den Schraubendreher 8 dar. Die von der Ringnut 24 gebildete Taillierung der Einstellschraube 3 bildete mit ihrer Umfangsfläche, die der Konus 23 darstellt, eine axiale Abstützung für die Schraubendreherspitze 14, so daß die Axialkomponente des von der Verzahnung 11 auf den Schraubendreher 8 ausgeübten auseinandertreibenden Kraftmomentes aufgefangen wird. Dies erfolgt jedoch nur bei Anlage der Spitze am Konus 23. Gleichzeitig stützt der Abstützsteg 7 den Schraubendreher 8 gegen das Kraftmoment axial ab. Ist der Konus 23 axial außerhalb des Eingiffs des Schraubendrehers 8 gelegen, kann der Abstützsteg 7 allein das Auffangen des Kraftmomentes axial übernehmen, wobei die Durchstecköffnung 10 hinsichtlich ihres Durchmessers derart bemessen ist, daß sie den Schaft des Schraubendrehers 8 nur mit geringem Spiel umgibt.

An die Verzahnung 11 schließt sich auf konusabgewandter Seite nach außen hin ein dritter Ringbund 25 an, an dem sich auf dessen der Verzahnung 11 zugewandter Seite 26 mehrere als Befestigungsmittel für die Einstellschraube 3 dienende biegeelastische Raststege 27 abstützen, die in baulich und funktionell günstiger Weise an der Stirnseite 28 des Abschnittes 5 des Gehäuses 1 konzentrisch umlaufend angeformt sind und linear, jedoch konisch zur Schraubenachse 9 hin zulaufend sich erstrecken. Die Raststege 27 und das Gehäuse 1 bilden damit fertigungstechnisch einfach herstellbar ein einheitliches Bauteil aus Kunststoff. Die Raststege 27 sind derart an der Durchführung 2 angeordnet, daß oberseitig von dieser ein Freiraum 29 ausgespart ist, durch den der Kreuzschlitz-Schraubendreher 8 mit der Einstellschraube 3 in Eingriff gelangen kann.

Der Ringbund 25 läuft nach außen hin konisch zu, wobei sich an diesen ein zylindrischer Endabschnitt 30 des Schraubenkopfes 31 anschließt. Der Endabschnitt 30 ist an seinem Umfang gerändelt und besitzt eine Sechskant-Außenform. Desweiteren ist an seiner Stirnseite 32 ein quer zur Schraubenachse 9 verlaufender Schlitz 33 ausgebildet und weist dort zusätzlich ein Innensechskantloch und auf dessen Grund einen Kreuzschlitz auf. Dadurch ist wahlweise die Einstellschraube 3 mit einer Münze, direkt manuell, über einen Gabelschlüssel, einen Imbusschlüssel, mit einem kurzen axial oder einen langen radial ansetzbaren Kreuzschlitz-Schraubendreher und somit universell betätigbar.

Die Werkstoffwahl für die Einstellschraube 3, die Verzahnung 11 und die Raststege 27 kann alle korrosionsbeständigen Werkstoffe betreffen. Jedoch ist es hinsichtlich einer Verringerung des Gewichtes der Anordnung, insbesondere des Gesamtgewichtes des Kraftfahrzeuges vorteilhaft dafür Leichtbauwerkstoffe wie beispielsweise Kunststoff einzusetzen. Für eine unaufwendige Fertigung ist es dabei zweckmäßig die Anordnungselemente einheitlich aus einem Material - in diesem Falle aus Kunststoff - zu gestalten, zumal bezüglich der Raststege 27 auch das Scheinwerfergehäuse 1 schon aus diesem gebildet ist.

Zur Montage wird zuerst die Elastomerdichtung 19 zwischen die Ringbünde 18 und 22 auf die Einstellschraube 3 aufgebracht. Alsdann wird die Einstellschraube 3 vom Gehäuseinneren 34 aus durch die Durchführung 2 gesteckt, wobei die Raststege 27 von der konischen Flanke 35 des Ringbundes 25 radial nach außen gedrückt werden, bis der Ringbund 18 über die Elastomerdichtung 19 an der Aussparung 21 zur Anlage kommt. Dann rasten die Raststege 27 auf der der Verzahnung 11 zugewandten Seite 26 des Ringbundes 25 am Umfang der Einstellschraube 3 ein, wodurch die Einstellschraube 3 infolge der beiderseitigen Abstützung axial festgelegt ist. Die Einstellschraube 3 ist am Reflektor 4 schon vormontiert und wird als Baueinheit verrastet. Schließlich wird die Einstellschraube 3 über die Verzahnung 11 durch den Kreuzschlitz-Schraubendreher 8 von oben betätigt, wodurch die Justierung sich des Reflektors 4 erfolgt. Die Einstellung des Reflektors 4 wird somit über nur ein einziges Bauteil rechtwinklig von oben ausgeführt. Die Verwendung eines Schraubendrehers 8 üblicher Länge von oben ist besonders bei engen Bauräumen von großem Vorteil. Ein derartiger Schraubendreher 8 ist ohne weiteres verfügbar, da dieser zumeist Bestandteil des Bordwerkzeuges ist.

## Patentansprüche

1. Anordnung zur Einstellung des Reflektorneigungswinkels bei Frontscheinwerfern eines Kraftfahrzeuges, mit einer in ein Scheinwerfergehäuse (1) schaftseitig hineinragenden, den Reflektor (4) justierend betätigbaren Einstellschraube (3), die am Gehäuse (1) drehbar gelagert und mittels eines Befestigungsmittels axial festgelegt ist und die an ihrem aus dem Gehäuse (1) herausragenden kopfseitigen Abschnitt (12) eine konzentrisch zur Schraubenachse (9) angeordnete Verzahnung (11) trägt, welche derart ausgebildet ist, daß in diese die Spitze eines quer zur Schraubenachse (9) angesetzten KreuzschlitzSchraubendrehers (8) in kämmender Weise eingreifbar ist, und mit einer am Gehäuse (1) angeordneten, auf die Verzahnung (11) ausgerichteten und quer zur Schraubenachse (9) verlaufenden Führung für den Kreuzschlitz-Schraubendrehe (8), wobei die Führung durch einen am Gehäuse (1) außenseitig und mit Abstand zur Einstellschraube (3) ausgeformten Abstützsteg (7) gebildet ist, der eine quer zur Schraubenachse (9) orientierte und an der Axialposition der Verzahnung (11) gelegene Durchstecköffnung (10) für den Kreuzschlitz-Schraubendreher (8) besitzt.
**dadurch gekennzeichnet,**
daß der kopfseitige Abschnitt (12) der Einstellschraube (3) mitsamt der angeformten Verzahnung (11) einen kleineren Durchmesser aufweist als der Durchmesser der Gehäusedurchführung (2), die für die Einstellschraube (3) vorgesehen ist, daß das Befestigungsmittel Rastelemente (27) sind, die außen am Gehäuse (1) zur Verrastung mit der Schraube (3) vorgesehen sind.

2. Anordnung nach Anspruch 1,
**dadurch gekennzeichnet,**
daß der Schaft und der Kopf (31) der Einstellschraube (3) einschließlich der Verzahnung (11) als einheitliches Bauteil aus einem korrosionsbeständigen Werkstoff, vorzugsweise aus einem Kunststoff bestehen.

3. Anordnung nach Anspruch 1,
**dadurch gekennzeichnet,**
daß der kopfseitige Abschnitt (12) der Einstellschraube (3) im Bereich der Verzahnung (11) eine Taillierung aufweist, deren der Verzahnung (11) gegenüberliegende Umfangsfläche eine axiale Abstützung für die schraubendreherseitige Verzahnung bildet.

## Claims

1. Design for setting the angle of reflection of the front reflector on vehicles, with an operable adjustment bolt (3), which projects into a reflector casing (1) on the shank side, for adjusting the reflector (4), and which is supported, such that it can rotate, on the casing (1), being axially fixed by an attachment means, this adjustment bolt (3) also carrying, on its top end section (12), which projects from the casing (1), cogging (11) which is disposed concentrically in relation to the axis of the bolt (9), the said cogging (11) being developed such that a Phillips screwdriver (8) can be applied, meshing, to its tip, in a transverse direction in relation to the bolt axis (9), and with a guiding means, for the Phillips screwdriver (8), disposed on the casing (1) such that it points towards the cogging, running transversely in relation to the bolt axis (9), whereby the guiding means is formed by a support bar (7), which, formed on the outer side of the casing (1), is separated by a gap from the adjustment bolt (3), and which has a hole (10) through it, for the insertion of the Phillips screwdriver (8), which is orientated transversely in relation to the axis (9) of the bolt and is positioned at the axial point of the cogging (11),
characterized in that
the top end section (12) of the adjustment bolt (3), together with the cogging (11) formed on it, has a narrower diameter than the opening (2) in the casing, provided for the adjustment bolt (3), and in that the attachment means are stop elements (27) which are provided, on the outside of the casing (1), for locking action using the bolt (3).

2. Design in accordance with claim 1,
characterized in that
the shank and the head (31) of the adjustment bolt (3), including the cogging (11), comprise a single component made of material which resists corrosion, preferably a plastic.

3. Design in accordance with claim 1,
characterized in that
the top end section (12), of the adjustment bolt (3), has, in the area of the cogging (11), a neck, the peripheral surface of which forms an axial brace for the cogging on the side of the screwdriver.

## Revendications

1. Agencement de réglage de l'angle d'inclinaison du réflecteur de phares avant d'un véhicule automobile, comprenant une vis de réglage (3) pénétrant avec sa tige dans un carter de phare (1) et pouvant actionner le réflecteur (4) pour son ajustement, cette vis de réglage étant montée en rotation dans le carter (1) et fixée axialement à l'aide d'un moyen de fixation, et portant, sur son tronçon (12) côté tête, faisant saillie hors du carter (1), une denture (11) disposée de manière concentrique à l'axe (9) de la vis et d'une configuration permettant d'y engager en prise, la pointe d'un tournevis cruciforme (8) appliqué transversalement à l'axe (9) de la vis, l'ensemble comportant également, pour le tournevis cruciforme (8), un guidage placé sur le carter (1), orienté vers la denture (11) et s'étendant transversalement à l'axe (9) de la vis, le guidage étant formé par une nervure d'appui (7) qui est moulée sur le côté extérieur du carter (1) et à distance de la vis de réglage (3), et qui possède une ouverture de passage (10) pour le tournevis cruciforme (8), orientée transversalement par rapport à l'axe (9) de la vis et située au niveau de la position axiale de la denture (11), **caractérisé** en ce que le tronçon (12) côté tête de la vis de réglage (3), y compris la denture (11) qui y est formée, présente un diamètre inférieur au diamètre du passage de carter (2), qui est prévu pour la vis de réglage (3), et en ce que le moyen de fixation est constitué par des éléments d'encliquetage (27), qui sont prévus à l'extérieur du carter (1), pour l'encliquetage avec la vis (3).

2. Agencement selon la revendication 1, **caractérisé** en ce que la tige et la tête (31) de la vis de réglage (3), y compris la denture (11), sont réalisées en tant que pièce homogène en un matériau résistant à la corrosion, de préférence en une matière plastique.

3. Agencement selon la revendication 1, **caractérisé** en ce que le tronçon (12) côté tête de la vis de réglage (3), présente, dans la zone de la denture (11), une partie entaillée, dont la surface périphérique opposée à la denture (11), forme un appui axial pour la denture du tournevis.
